# EUROPÄISCHE PATENTANMELDUNG

(11) **EP 1 813 736 A1**
(43) Veröffentlichungstag der Anmeldung: **01.08.2007**
(21) Anmeldenummer: 07002044.1
(22) Anmeldetag: 30.01.2007
(51) Int. Cl.: E04B 1/92, G08B 21/18, G01M 5/00, G01B 21/32, G01B 11/16

(54) **Überwachungssystem zur kontinuierlichen Überwachung der Gebäudestatik**

(30) Priorität: 30.01.2006 DE 202006001480 U
(71) Anmelder: Heinze, Thomas, Prof. Dr.-Ing., 66117 Saarbrücken (DE)
(72) Erfinder: Heinze, Thomas, Prof. Dr.-Ing., 66117 Saarbrücken (DE)

(57) **Zusammenfassung**

Zur kontinuierlichen Überwachung der Gebäudestatik auf Überlastung und/oder Alterung, sind an ausgewählten Stellen, an so genannten Kontrollpunkten der Tragstruktur des Gebäudes Messeinrichtungen dauerhaft angebracht, die die Dehnung, die mechanische Spannung und/oder die Auslenkung der Tragstruktur an bestimmten Punkten kontinuierlich bestimmen. Die Messausgangssignale werden von einem automatischen Controller kontinuierlich auf eine Überlastung und/oder Alterung der Gebäudetragstruktur ausgewertet und/oder zur Dokumentation oder nachträglichen Auswertung auf einem Festspeichermedium kontinuierlich abgespeichert.

## Beschreibung

Die Erfindung geht von einem Überwachungssystem zur kontinuierlichen Überwachung der Gebäudestatik nach der Gattung des Hauptanspruchs aus.

### Stand der Technik

Einstürze von Hallendächern in den Jahren 2005 und 2006 mit Todesfolge haben gezeigt, dass einfache Messmittel zur kontinuierlichen Überwachung der Gebäudestatik fehlen. Überprüfungen der Gebäudestatik mit vorhandenen Messmitteln können nur von Experten in bestimmten Zeitabständen durchgeführt werden. Diese Zeitabstände waren zu lang und die Ergebnisse der Überprüfungen nicht aussagekräftig genug, um Unfälle zu verhindern. Insbesondere können durch derartige Überwachungen schnelle Wechsel der Belastung der Gebäudestatik bis in Grenzbereiche durch Witterungseinflüsse, wie z.B. extremer Schneefall, nicht erfasst werden. Daher besteht dringender Bedarf an kostengünstigen kontinuierlichen Messmitteln zur Überwachung der Gebäudestatik.

### Aufgabenstellung, Vorteile der Erfindung

Die Statik eines Gebäudes soll durch festinstallierte Messmittel kontinuierlich kontrolliert und überwacht werden. Beim Überschreiten von kritischen Grenzen der Gebäudestatik soll automatisch ein Warnsignal ertönen, das die Personen im Gebäude oder verantwortliches Überwachungspersonal vor einem möglichen Einsturzrisiko warnt.

Die Aufgabenstellung wird gelöst, indem an besonders geeigneten Stellen der Gebäudestruktur bewegungs- bzw. dehnungsabhängige Messmittel fest installiert werden, insbesondere auf der Basis von Dehnungsmessstreifen (DMS) oder optischen Verfahren. Genannte Messmittel werden kontinuierlich ausgelesen und deren Signale werden ständig auf eine mögliche Überschreitung von kritischen Grenzwerten überwacht. Genannte geeignete Messstellen der Gebäudestruktur werden von einem Fachmann so ausgewählt, das kritische Veränderungen der Gebäudestruktur möglichst gut und reproduzierbar erkannt werden können; dies sind insbesondere Stellen mit geeigneten Dehnungen bzw. Winkelablenkungen.

### Ausführungsbeispiel

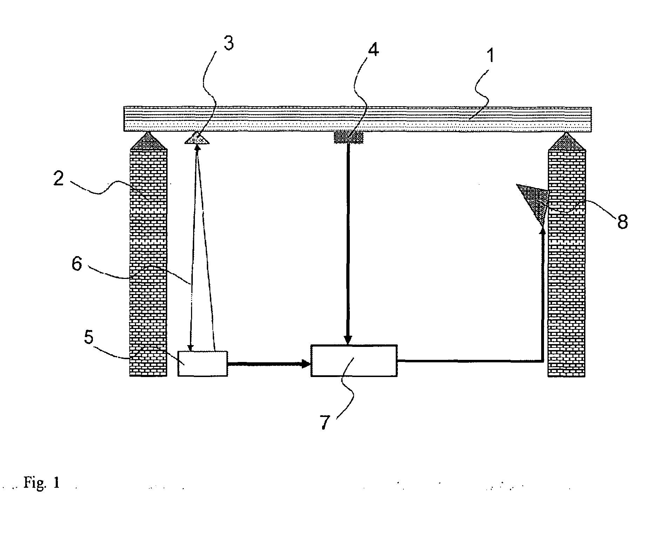

Fig. 1 zeigt eine schematische Darstellung einer bevorzugten Ausführung. Es wird die Bewegung bzw. Durchbiegung eines Deckenträgers 1 überwacht. Der Träger 1 liegt auf bestimmten Lagerpunkten auf Stützkörpern 2 auf. Relativ zu den Lagerpunkten ist an einer geeigneten Position ein starrer Umlenkspiegel 3 und/oder ein DMS-Modul 4 am Träger angebracht. Der Umlenkspiegel 3 wird kontinuierlich von einem Licht-Detektor-Modul 5 angestrahlt, das einen Lichtstrahl 6 aussendet und über einen integrierten Detektor die relative Auslenkung des Lichtstrahls 6 bestimmt. Die Signale vom DMS-Modul 4 und/oder Laser-Detektor-Modul 5 werden in einem Controller ausgewertet und/oder zur Dokumentation und ggf. zur nachträglichen Auswertung abgelegt. Bei Grenzwertüberschreitungen, die auf eine Überlastung des Trägers deuten, sendet der Controller 7 ein automatisches Warnsignal an die Warneinrichtung 8.

### Bezugszeichenliste

- 1.: Deckenträger
- 2.: Stützkörper bzw. tragende Wand
- 3.: starrer Umlenkspiegel
- 4.: DMS-Modul
- 5.: Licht-Detektor-Modul
- 6.: Lichtstrahl
- 7.: Controller
- 8.: Warneinrichtung

## Patentansprüche

1. Vorrichtung zur kontinuierlichen Überwachung der Gebäudestatik auf Überlastung und/oder Alterung, **gekennzeichnet dadurch, dass** an ausgewählten Stellen, an so genannten Kontrollpunkten der Tragstruktur des Gebäudes Messeinrichtungen dauerhaft angebracht sind, die die Dehnung, die mechanische Spannung und/oder die Auslenkung der Tragstruktur an bestimmten Punkten kontinuierlich bestimmen und deren Messausgangssignale von einem automatischen Controller kontinuierlich auf eine Überlastung und/oder Alterung der Gebäudetragstruktur ausgewertet werden und/oder deren Messausgangssignale zur Dokumentation oder nachträglichen Auswertung auf einem Festspeichermedium kontinuierlich abgespeichert werden.

2. Vorrichtung zur kontinuierlichen Überwachung der Gebäudestatik auf Überlastung und/oder Alterung nach Anspruch 1, **gekennzeichnet dadurch, dass** bei einer Überlastung der Gebäudetragstruktur ein Warnsignal im Gebäude ausgegeben wird.

3. Vorrichtung zur kontinuierlichen Überwachung der Gebäudestatik auf Überlastung und/oder Alterung nach einem der vorherigen Ansprüche, **gekennzeichnet dadurch, dass** insbesondere optische Messeinrichtungen, Messeinrichtungen mit Dehnungsmessstreifen (DMS) und/oder Messverfahren aus der Gruppe akustische, induktive, kapazitive, piezoresistive Messverfahren oder Resonanzmessverfahren verwendet werden.

4. Vorrichtung zur kontinuierlichen Überwachung der Gebäudestatik auf Überlastung und/oder Alterung nach Anspruch 3, **gekennzeichnet dadurch, dass** die relative Auslenkung der Kontrollpunkte der Tragstruktur über die Auslenkung eines Lichtstrahls durch einen am Kontrollpunkt fest angebrachten Spiegel, durch eine am Kontrollpunkt fest angebrachte Lichtquelle oder über ein laserinterferometrisches Verfahren bestimmt wird.

5. Vorrichtung zur kontinuierlichen Überwachung der Gebäudestatik auf Überlastung und/oder Alterung nach Anspruch 4, **gekennzeichnet dadurch, dass** zur Bestimmung der Auslenkung des Lichtstrahls ein bildgebendes Verfahren oder ein Sensor-Array genutzt wird.

6. Vorrichtung zur kontinuierlichen Überwachung der Gebäudestatik auf Überlastung und/oder Alterung nach Ansprüchen 4 oder 5, **gekennzeichnet dadurch, dass** die optischen Einrichtungen mit Justage- und Nachführeinrichtungen hard- und/oder softwareseitig ausgestattet sind.

7. Vorrichtung zur kontinuierlichen Überwachung der Gebäudestatik auf Überlastung und/oder Alterung nach einem der vorherigen Ansprüche, **gekennzeichnet dadurch, dass** das Warnsignal über einen Lautsprecher oder ein Display ausgegeben wird.

8. Vorrichtung zur kontinuierlichen Überwachung der Gebäudestatik auf Überlastung und/oder Alterung nach einem der vorherigen Ansprüche, **gekennzeichnet dadurch, dass** die eingesetzten Messmittel regelmäßig mit konventioneller Messtechnik überprüft oder nachjustiert werden.
